**Europäisches Patentamt**

**European Patent Office**

**Office européen des brevets**

(11) Veröffentlichungsnummer: **0 093 453**

**A1**

## (12) EUROPÄISCHE PATENTANMELDUNG

(21) Anmeldenummer: **83104343.5**

(22) Anmeldetag: **03.05.83**

(51) Int. Cl.³: **E 02 D 29/02**
**E 01 F 8/00, A 01 G 9/00**

(30) Priorität: **05.05.82 AT 1769/82**

(43) Veröffentlichungstag der Anmeldung:
**09.11.83 Patentblatt 83/45**

(84) Benannte Vertragsstaaten:
**AT BE CH DE FR IT LI NL SE**

(71) Anmelder: **Rausch, Peter**

**A-8621 Thörl Steiermark(AT)**

(71) Anmelder: **Terkl, Hans Ulrich**

**A-8641 St. Marein i. M.(AT)**

(72) Erfinder: **Rausch, Peter**

**A-8621 Thörl Steiermark(AT)**

(72) Erfinder: **Terkl, Hans Ulrich**

**A-8641 St. Marein i. M.(AT)**

(74) Vertreter: **Lorenz, Werner, Dipl.-Ing.**
**Fasanenstrasse 7**
**D-7920 Heidenheim(DE)**

(54) Balkenelement.

(57) Ein Balkenelement (1) besitzt im wesentlichen einen U-förmigen Querschnitt und an seinen Enden weist er Köpfe (2) von im wesentlichen rechteckigem Querschnitt auf. Die Köpfe können mit Ausnehmungen (3) versehen sein, die die Köpfe durchdringen. In die Ausnehmungen können Stäbe (7) angeordnet werden, die vorzugsweise in Fundamentblöcke (8) verankert und mittels Muttern (9) verspannt sind.

FIG. 1

EP 0 093 453 A1

PATENTANWALT

DIPL.-ING. WERNER LORENZ

Fasanenstraße 7
D-7920 Heidenheim

0093453

25.03.1983 - Kn
Akte: TE 947

Anmelder:
=========

1. Peter Rausch               2. Hans Ulrich Terkl
   8621 Thörl, Steiermark        8641 St. Marein i.M.
   Österreich                    Österreich


Balkenelement
=============

Die Erfindung betrifft ein Balkenelement, insbesondere zum Herstellen gitterförmiger Wände.

In der DE-OS 31 21 681 ist bereits ein Balkenelement zur Bildung einer gitterförmigen Wand aus Fertigteilen beschrieben, das im Querschnitt U- bzw. trogförmig ausgebildet ist. Die Balken sind dabei nahe den Enden mit den Trogboden durchsetzenden Löchern ausgestattet. Werden nun diese Balkenelemente Loch über Loch übereinandergelagert und mittels durch die Löcher gesteckter Stäbe verbunden, so ergibt sich eine gitterförmige Wand. Ebenso können diese Balkenelemente in herkömmlicher Weise durch Stahlbetonsäulen miteinander verbunden werden.

- 2 -

Als Baustoff für die Balkenelemente kann man verschiedene Materialien verwenden. Im allgemeinen wird man jedoch diese Balkenelemente aus Beton bilden. Selbstverständlich ist eine Herstellung jedoch auch aus Holz oder Kunststoff oder einem anderen Material möglich.

Eine aus derartigen Balkenelementen zusammengesetzte gitterförmige Wand kann für die verschiedensten Einsatzfälle und Funktionen verwendet werden. So können damit z.B. Stützwände an Böschungen, Lärmschutzwände, Einfriedungen u.dgl. gebaut werden. Ebenso können diese Balkenelemente für Uferbefestigungen und Flußregulierungen ebenso wie für Brückenwiderlager und Pfeiler dienen. In gleicher Weise können diese Balkenelemente als Mauerverkleidungen verwendet werden.

Zur Verbindung der einzelnen Balkenelemente über die Löcher und entsprechend durchgesteckte Stangen miteinander verwendete man bisher hierzu Gewindehülsen und Druckplatten, die auf das jeweils oberste Balkenelement wirkten.

Der vorliegenden Erfindung liegt die Aufgabe zugrunde, Balkenelemente, insbesondere zum Herstellen gitterförmiger Wände, weiter zu verbessern, insbesondere Balkenelemente zu schaffen, die eine hohe Stabilität aufweisen und mit denen bei einer Verbindung der Balkenelemente über Stäbe dies auf einfache Weise erfolgen kann.

Erfindungsgemäß wird diese Aufgabe dadurch gelöst, daß das Balkenelement im wesentlichen einen U-förmigen Querschnitt besitzt und an seinen Enden Köpfe von im wesentlichen rechteckigem Querschnitt aufweist.

Durch die erfindungsgemäßen Köpfe werden Stege gebildet, die zur Verstärkung des Balkenelementes dienen. Auf diese Weise sind die Balkenelemente noch stärker belastbar.

Bei kurzen Balkenelementen wird es ausreichend sein, an beiden Enden erfindungsgemäße Köpfe anzuordnen, während man bei längeren Balkenelementen vorzugsweise noch einen weiteren Kopf im Mittelbereich anordnen wird.

Wenn zu Montagezwecken in den Köpfen Ausnehmungen vorgesehen sind, die die Köpfe durchdringen, so wird durch diese ein weiterer Vorteil erreicht. So sind die Montagestäbe durch diese Köpfe besser geschützt und die Montage ist einfacher. Die Auflagefläche der Köpfe kann dabei eine gesonderte Druckplatte ersetzen.

Eine weitere sehr vorteilhafte Ausgestaltung besteht darin, daß die Ausnehmungen als Langlöcher ausgebildet sind, wobei sich deren Längsachsen quer zur Längsachse des Balkenelementes erstrecken.

Werden nämlich derartige Balkenelemente im Verbund gitterförmig so übereinander angeordnet, so daß jeweils deren Oberseiten offen sind und werden die Balkenelemente mit Erde und Pflanzen gefüllt, so besteht das Problem, daß die unteren Pflanzen nicht beregnet werden können. Bildet man nun erfindungsgemäß diese Ausnehmungen als Langlöcher aus, so können die Balkenelemente terassenartig übereinander angeordnet werden, wobei jedes Mal die darunter liegenden Balkenelemente um ein Stück nach vorne geschoben werden, so daß sie jeweils gegenüber dem darüberliegenden Balkenelement vorragen. Auf diese Weise erhalten sie Regenwasser. Trotzdem lassen sich die Balkenelemente aufgrund der Langlöcher miteinander verbinden.

Aus Gründen der Einheitlichkeit und zur Auflockerung können die äußeren Endteile der Köpfe im Querschnitt gesehen ebenfalls U-förmig ausgebildet sein.

Statt einer Verbindung der einzelnen Balkenelemente über die Ausnehmungen und Stäbe oder zusätzlich dazu können diese Balkenelemente auch durch Betonsäulen oder andere Betonierungsmethoden miteinander verbunden werden (z.B. Ausfüllen der Ausnehmungen mit Beton).

So kann sich an einem Balkenelement an einem Ende der Kopf nur über die halbe Breite des Balkenelementes erstrecken, wobei die Ausnehmung als nutartige Aussparung ausgebildet ist. Setzt man dann ein zweites Balkenelement in spiegelbildlicher Anordnung dazu, so wird eine allseits geschlossene Ausnehmung gebildet, die mit Beton ausgegossen werden kann.

Dabei wird eine noch bessere Verbindung der einzelnen Balkenelemente untereinander erreicht, wenn die Aussparung schwalbenschwanzartig ausgebildet ist.

In gleicher Weise können sich die Köpfe an einem Ende nur über die halbe Höhe des Balkenelementes erstrecken. In diesem Falle überlappen sich die Balkenelemente im Bereich der Köpfe, denn zur Herstellung einer gitterförmigen Wand wird man ein Balkenelement so anordnen, daß sich der "halbe" Kopf im oberen Bereich befindet und dann das darunterliegende Balkenelement um 180° versetzt darunter geschoben wird, so daß sich der zweite "halbe" Kopf im unteren Bereich befindet.

Nachfolgend sind anhand der Zeichnung Ausführungsbeispiele der Erfindung prinzipmäßig beschrieben.

Es zeigen:

Fig. 1 und 2 zwei verschiedene Balkenelemente im Längsschnitt,

Fig. 3 einen Schnitt nach der Linie III-III der Fig. 1 und 2,

Fig. 4 und 5 Grundrisse nach den Fig. 1 und 2,

Fig. 6 bis 14 verschiedene gitterförmige Wandkonstruktionen mit den erfindungsgemäßen Balkenelementen,

Fig. 15 eine Wandkonstruktion anderer Bauart,

Fig. 16 und 17 Balkenelemente zur Herstellung
einer Wandkonstruktion nach der Fig. 15,

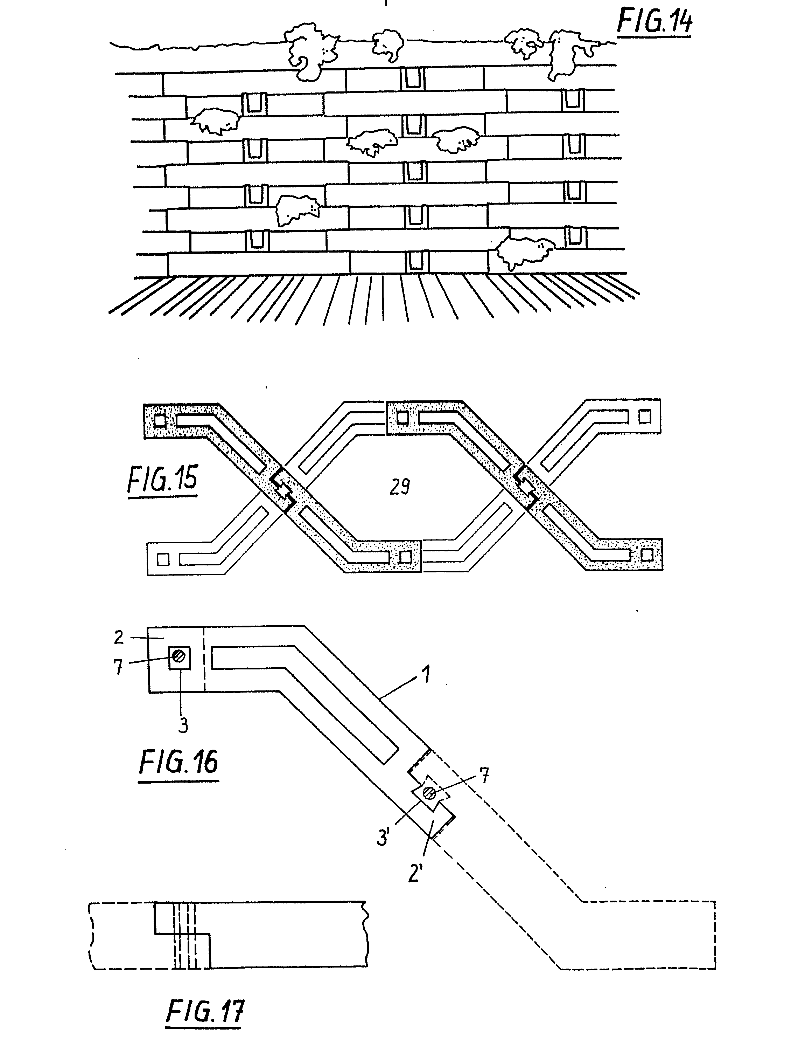

(Fig. 16 im Grundriß; Fig. 17 in Seitenansicht)

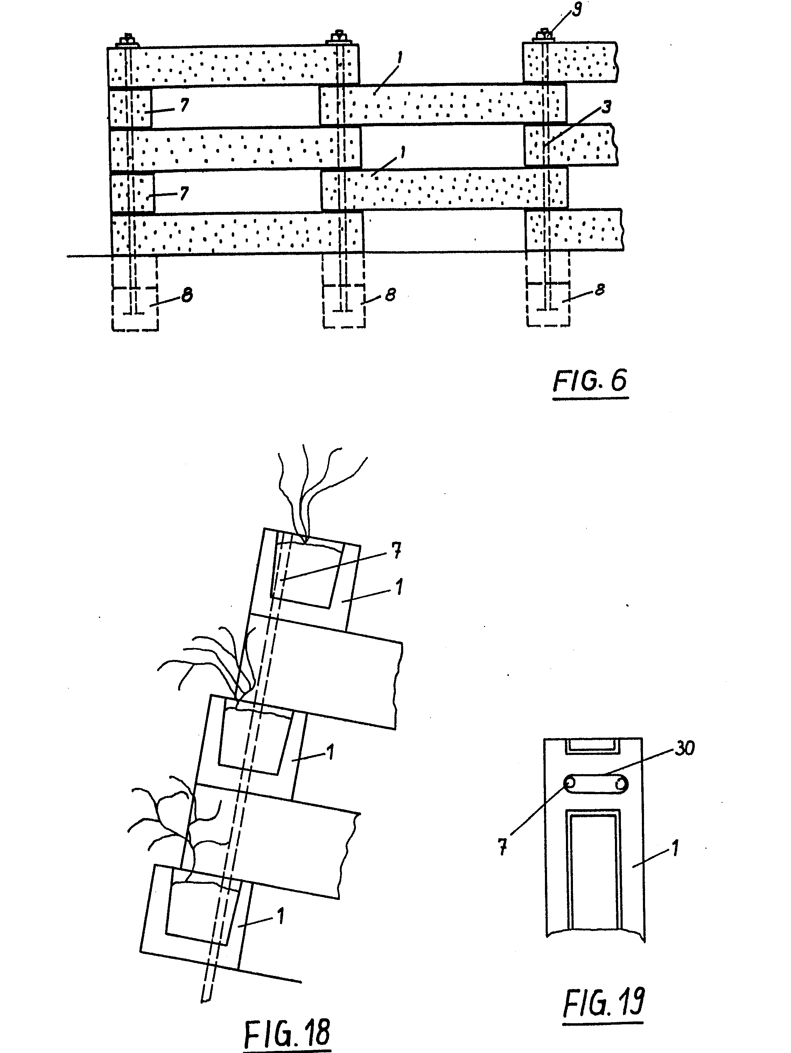

Fig. 18 terassenförmig übereinander angeordnete
Balkenelemente,

Fig. 19 einen Grundriß (ausschnittsweise) eines
Balkenelementes zur Herstellung einer
Wand nach der Fig. 18.

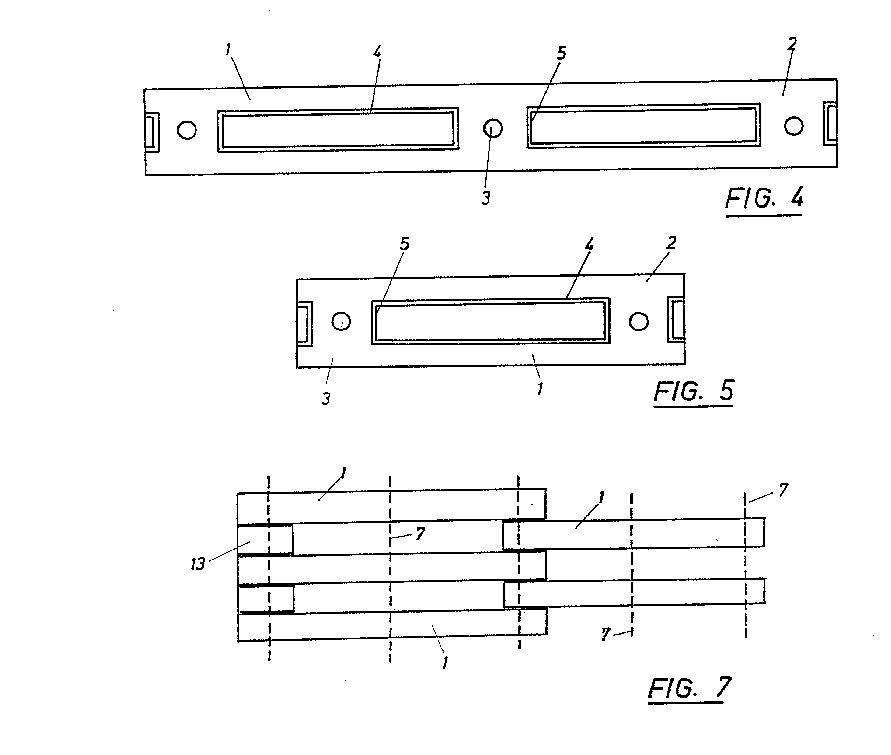

Aus Fig. 1 ist ein Normalbalkenelement 1 zu ersehen,
das an seinen beiden Enden und auch im Mittelbereich
Köpfe 2 besitzt, die im wesentlichen einen rechteckigen
Querschnitt haben. Demgegenüber veranschaulicht Fig. 2
einen derartigen Kurzbalken. Mit 2 sind wiederum die
Köpfe bezeichnet, 3 sind Ausnehmungen, die die Köpfe 2
zur Gänze durchdringen. Zur Bildung einer gitterförmigen Wand werden in diese Ausnehmungen 3, Stäbe 7 hindurchgesteckt, die in Fundamentblöcken 8 (Fig. 6) verankert und mittels Muttern 9 verspannt werden können.
Die Fig. 4 und 5 lassen diese Normalbalken bzw. Kurzbalken im Grundriß gesehen, erkennen.

Aus dem in Fig. 3 dargestellten U-förmigen Querschnitt
ersieht man, daß innen eine konische Erweiterung nach
außen vorliegt. Es haben sich z.B. folgende Dimensionierungen als vorteilhaft erwiesen: Höhe und Breite
des U-förmigen Querschnitts außen gemessen 200 mm. Der
Boden im Inneren des Balkenelementes ist 90 mm breit,

- 7 -

am oberen Ende ist diese Breite auf 100 mm erweitert. Abgefaste Kanten an den vier oberen Längskanten und an den kurzen Querkanten liegen jeweils in der Größenordnung von 6 mm. Der Krümmungsradius am Boden (innen) ist jeweils 4 mm. Die Montagestäbe 7 können auch mit Fließbeton eingegossen werden. Der Normalbalken kann beispielsweise 1600 mm lang sein, wohingegen der Kurzbalken nur eine Länge von 900 mm aufweisen kann. Die genannten Köpfe 2 sind etwa in der Größenordnung von 140 / 140 mm ausgeführt. Die Ausnehmungen 3 können ebenfalls konisch ausgebildet sein, in einer Größenordnung von z.B. 40 / 41 mm.

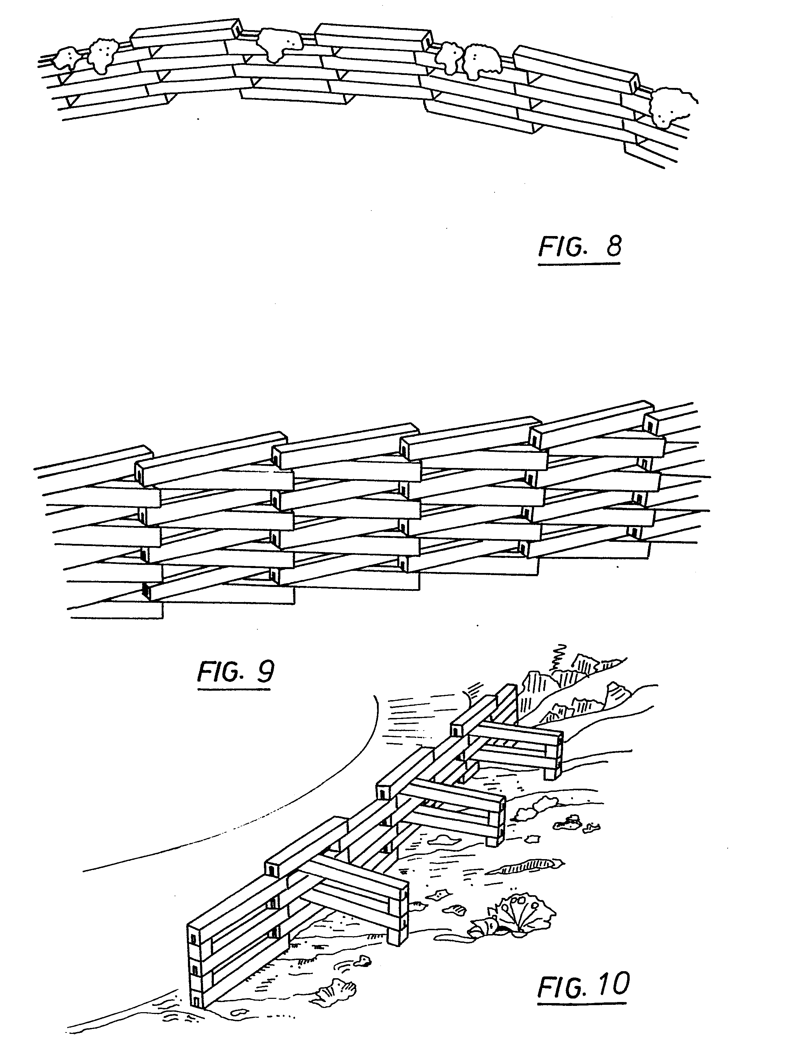

Aus Fig. 6 ist eine derartige gitterförmige Wand zu ersehen. Die Balkenelemente tragen wiederum das Bezugszeichen 1, mit 7 sind Montagestäbe bezeichnet, die in Fundamentblöcken 8 verankert und mittels Muttern 9 verspannt sind. Zur Bildung einer Wand nach Fig. 6 werden Kurzbalkenelemente 1 verwendet. Im Gegensatz dazu wird die gitterförmige Wand nach Fig. 7 von Normalbalken 1 gebildet. Fig. 7 läßt schematisch eine derartige Wand erkennen. 7 stellen wiederum schematisch die Montagestäbe dar. Mit 13 sind Endstücke bezeichnet, um die Wand glatt abzuschließen. Wie man insbesondere aus den Fig. 6 und 7 ersieht, sind die Balkenelemente 1 jeweils im offenen Läuferverband Loch über Loch angeordnet und mittels durch die Löcher gesteckte Stäbe 7 verbunden. Dies gilt grundsätzlich auch für die gitterförmigen Wände nach den Fig. 8 bis 14.

Fig. 8 stellt eine Einfriedung bzw. Brüstung in ein-

- 8 -

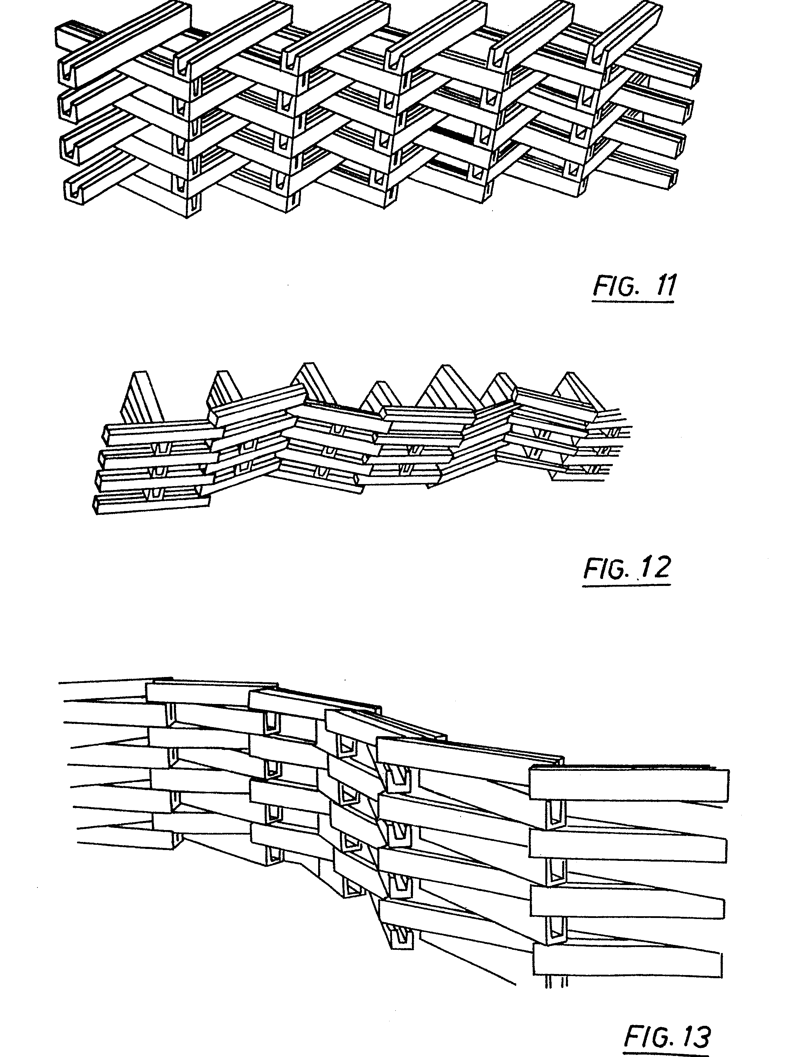

facher Ausführung dar. Fig. 9 zeigt einen Schutzraum bzw. eine Absperrung in doppelter Ausführung. In Fig. 10 ist eine Schutzverbauung oder eine Uferverbauung dargestellt, auch Fig. 11 veranschaulicht einen Schutzwall bzw. eine Lärmschutzwand, die auch zur Verteidigung Verwendung finden kann. In Fig. 12 ist eine Böschungsmauer oder Stützwand abgebildet. Die Fig. 13 veranschaulicht eine Beton-Gittereinfriedung. Auch Fig. 14 läßt eine solche Gitterwand erkennen. Aus der Fig. 14 ist auch ersichtlich, daß bei einer Anordnung der Balkenelemente derart, daß das U-Profil nach oben offen ist, der Innenraum der Balkenelemente mit Erde und Pflanzen gefüllt werden kann. Auf diese Weise ergibt sich eine Begrünung der Gitterwand. Dies ist insbesondere bei der Bildung von Lärmschutzwänden in bebauten Zonen von Vorteil.

In der Fig. 15 ist eine andere Konstruktion einer gitterförmigen Wand dargestellt. Wie daraus ersichtlich, sind die Balkenelemente 1 abgeknickt, wobei der Winkel 45° beträgt. Während an einem Ende der Balken 1 mit einem normalen Kopf 2 versehen ist, kann dessen anderes Ende mit einem Kopf 2 ' versehen sein, der sich nur über die halbe Breite des Balkenelementes erstreckt. Dabei ist die Ausnehmung 3' als nutartige Aussparung ausgebildet. Aus der Fig. 16 ist ein derartiges Balkenelement ersichtlich. Wie ebenfalls in der Fig. 16 gestrichelt angedeutet, kann in spiegelbildlicher Weise ein weiteres Balkenelement dazugesetzt werden, so daß sich wieder eine allseits geschlossene Ausnehmung ergibt. Diese Ausnehmung kann dann mit Beton ausgefüllt werden und/oder mit einem Montagestab 7 versehen werden. Auf diese Weise lassen sich ebenfalls mehrere Balkenelemente zu einer Wand vereinigen.

Eine andere Möglichkeit bzw. eine Möglichkeit, die sich ggf. mit dem in der Fig. 16 beschriebenen Balkenelement kombinieren läßt, ist in der Fig. 17 dargestellt. Dabei erstreckt sich der Kopf 2 an einem Ende nur über die halbe Höhe des Balkenelementes. Dies bedeutet, er bildet einen Überstand. Setzt man nun ein weiteres Balkenelement um 180° verdreht darunter - wie gestrichelt in der Fig. 17 angedeutet - so überlappen sich die beiden Köpfe und bilden damit glatte Übergänge zur Fortsetzung von Balkenelementen. Auch diese Köpfe sind mit einer Ausnehmung 3 versehen, in die Montagestäbe 7 gesteckt werden können.

Aus der Fig. 15 ist dabei die Form einer Wand ersichtlich, welche mit den in den Fig. 16 und 17 dargestellten Balkenelementen gebildet werden kann. Dabei liegen die stärker dargestellten Balkenelemente in einer Ebene und die schwächer dargestellten Balkenelemente in der darunter liegenden Ebene. Die auf diese Weise gebildeten sechseckigen Zwischenräume 9 können mit Erde oder Humus aufgefüllt werden.

In der Fig. 18 sind drei übereinander angeordnete Balkenelemente 1 mit zwei quer dazu und dazwischen liegenden Balkenelementen dargestellt, die eine Stützwand bilden (Konstruktionsart vergleiche auch Fig. 6 und 12). Wie ersichtlich sind dabei zur besseren Aufnahme der Kräfte die Balkenelemente leicht schräg angeordnet.
Es ist jedoch klar, daß diese ebenfalls vertikal übereinanderliegend angeordnet werden können. Damit nun die
beiden unteren Balkenelemente auf natürliche Weise beregnet werden können, sind diese etwas nach vorne versetzt angeordnet. Trotzdem können die drei Balkenelemente durch einen gemeinsamen Montagestab 7 miteinander
verbunden und verankert werden. Zu diesem Zweck sind
die in den Fig. 1 bis 5 dargestellten Ausnehmungen
nicht kreisrund, sondern als Langlöcher 30 ausgebildet,
wobei dessen Längsachsen sich jeweils quer zu den Längsachsen der Balkenelemente erstrecken. Dies ist aus dem
in der Fig. 19 dargestellten Balkenelement ersichtlich,
das dort teilweise im Grundriß dargestellt ist. Der
Montagestab liegt dabei bei dem obersten Balkenelement
in dem Langloch im Bereich der äußeren Rundung, während
er in dem untersten Balkenelement in dem Langloch in
dem Bereich der hinteren Rundung (gestrichelt dargestellt) liegt.

Regenwasser kann dabei sowohl in dem Bereich des überstehenden Teiles des Balkenelementes als auch durch ein
Herablaufen an der Außenwand des darüberliegenden Balkenelementes die Bepflanzung der beiden unteren Balkenelemente mit Wasser versorgen.

- 11 -

25.03.1983 - Kn

Akte: TE 947

Anmelder:
=========

1. Peter Rausch
   8621 Thörl, Steiermark
   Österreich

2. Hans Ulrich Terkl
   8641 St. Marein i.M.
   Österreich

Patentansprüche
================================

1. Balkenelement, insbesondere zum Herstellen gitterförmiger Wände, dadurch gekennzeichnet, daß das Balkenelement (1) im wesentlichen einen U-förmigen Querschnitt besitzt und an seinen Enden Köpfe (2) von im wesentlichen rechteckigem Querschnitt aufweist.

2. Balkenelement nach Anspruch 1, dadurch gekennzeichnet, daß zusätzlich Köpfe (2) in seinem Mittelbereich angeordnet sind.

- 12 -

3. Balkenelement nach Anspruch 1 oder 2,
d a d u r c h   g e k e n n z e i c h n e t , daß
in den Köpfen (2) Ausnehmungen (3) vorgesehen sind,
die die Köpfe (2) durchdringen.

4. Balkenelement nach Anspruch 3,
d a d u r c h   g e k e n n z e i c h n e t , daß
die Ausnehmungen als Langlöcher (30) ausgebildet
sind, wobei sich deren Längsachsen quer zur Längsachse des Balkenelementes (1) erstrecken.

5. Balkenelement nach einem der Ansprüche 1 bis 4,
d a d u r c h   g e k e n n z e i c h n e t , daß
die äußeren Endteile (6) der Köpfe (2) im Querschnitt
gesehen ebenfalls U-förmig ausgebildet sind.

6. Balkenelement nach einem der Ansprüche 1 bis 5,
d a d u r c h   g e k e n n z e i c h n e t , daß
es abgewinkelt ist.

7. Balkenelement nach einem der Ansprüche 1 bis 6,
d a d u r c h   g e k e n n z e i c h n e t , daß
an einem Ende der Kopf (2') sich nur über die halbe
Breite des Balkenelementes erstreckt, wobei die Ausnehmung als nutartige Aussparung (3') ausgebildet
ist.

8. Balkenelement nach Anspruch 7,
d a d u r c h   g e k e n n z e i c h n e t , daß
die Aussparung (3') schwalbenschwanzartig ausgebildet ist.

9. Balkenelement nach einem der Ansprüche 1 bis 8 ,
   d a d u r c h   g e k e n n z e i c h n e t , daß
   sich der Kopf (2) an einem Ende nur über die halbe
   Höhe des Balkenelementes (1) erstreckt.

10. Gitterförmige Wand aus Balkenelementen nach den
    obenstehenden Ansprüchen 1 bis 9,
    d a d u r c h   g e k e n n z e i c h n e t , daß
    in den Ausnehmungen (3) Stäbe (7) angeordnet sind,
    die vorzugsweise in Fundamentblöcken (8) verankert
    und mittels Muttern (9) verspannt sind.

FIG. 4

FIG. 5

FIG. 7

0093453

FIG. 8

FIG. 9

FIG. 10

FIG. 11

FIG. 12

FIG. 13

5/6

0093453

FIG.14

FIG.15

29

FIG.16

2
7
3
1
7
3'
2'

FIG.17

*FIG. 6*

*FIG. 18*

*FIG. 19*

Europäisches
Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 456 915 (ACROW)<br>* Seite 16, Absatz 1; Seite 20, Absätze 2,3; Seite 21, Absätze 1,2; Figuren 32,53-58 * | 1-4,10 | E 02 D 29/02<br>E 01 F 8/00<br>A 01 G 9/00 |
| A | GB-A-1 552 623 (CRIGHTON)<br><br>* Seite 2, Zeilen 21-94; Figuren 1-15 * | 1-4,6,<br>10 | |
| A | US-A-2 828 613 (WILSON) | | |

RECHERCHIERTE
SACHGEBIETE (Int. Cl. ³)

E 02 D
E 01 F
A 01 G

Der vorliegende Recherchenbericht wurde für alle Patentansprüche erstellt.

| Recherchenort<br>DEN HAAG | Abschlußdatum der Recherche<br>08-08-1983 | Prüfer<br>RUYMBEKE L.G.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82